# EUROPEAN PATENT APPLICATION

(11) **EP 4 465 739 A1**
(43) Date of publication of application: **20.11.2024**
(21) Application number: 22917942.9
(22) Date of filing: 10.01.2022
(51) Int. Cl.: H04W 74/08

(54) **EARLY IDENTIFICATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2022/071118
(87) International publication number: WO 2023/130472

(57) **Abstract**

Provided in embodiments of the present application is an early identification method. The method is executed by a base station, and the method comprises: determining a preset mode for terminal type information, wherein the preset mode is a mode for sending terminal type information; and receiving terminal type information sent by a terminal, wherein the terminal type information is used for early identification of the terminal. In the embodiments of the present application, compared with a mode in which terminal type information can be sent only after an RRC connection is established, the terminal type can be early identified on the basis of a preset mode, so that for different types of terminals, configuration operations for the terminals can be accurately and reliably executed.

## Description

### TECHNICAL FIELD

The disclosure relates to but is not limited to the field of wireless communication technologies, more particularly, to an early identification method, an early identification apparatus, a communication device and a storage medium.

### BACKGROUND

As the network continues to evolve, a new terminal, namely, a reduced capability (Redcap) terminal, is introduced. The Redcap terminal differs from ordinary terminals, such as an enhanced Mobile Broadband (eMBB) terminal. The Redcap terminal usually meets the following requirements: i) low-cost, low-complexity; ii) a degree of coverage enhancement; and iii) power-efficient.

In the related art, the network needs to configure different parameters for different types of terminals. For example, when configuring extended Discontinuous Reception (eDRX), the network needs to configure different eDRX parameters for different types of terminals.

### SUMMARY

Embodiments of the disclosure provide an early identification method, an early identification apparatus, a communication device and a storage medium.

According to a first aspect of embodiments of the disclosure, an early identification method, performed by a base station, is provided. The method includes:
determining a preset mode for terminal type information, the preset mode being a mode for sending the terminal type information; and
receiving the terminal type information sent by a terminal, the terminal type information being used for early identification of the terminal.

In an embodiment, the terminal is one or more of:
a reduced capability (Redcap) terminal; or
a preset version of a new radio (NR) terminal.

In an embodiment, the preset mode is one or more of:
a first mode of receiving the terminal type information sent by the terminal through a first random access message (msg1) in a four-step random access procedure;
a second mode of receiving the terminal type information sent by the terminal through a third random access message (msg3) in a four-step random access procedure;
a third mode of receiving the terminal type information sent by the terminal through a random access message (msgA) of a physical random access channel (PRACH) in a two-step random access procedure;
a fourth mode of receiving the terminal type information sent by the terminal through an msgA of a physical uplink shared channel (PUSCH) in a two-step random access procedure; or
a fifth mode of receiving the terminal type information sent by the terminal through a fifth message (msg5) in a random access procedure.

In an embodiment, the msg1 is configured to indicate a preset random access resource, and/or, the msgA of the PRACH in the two-step random access procedure is configured to indicate a preset random access resource; in which the preset random access resource is configured by the base station.

In an embodiment, the method further includes:
determining that the terminal is a terminal that needs to be identified early; and
sending a notification message to a core network device, in which the notification message is configured to notify that the terminal is the terminal that needs to be identified early.

According to a second aspect of embodiments of the disclosure, an early identification method, performed by a terminal, is provided. The method includes:
sending terminal type information to a base station based on a preset mode determined by the base station, in which the preset mode is a mode for sending the terminal type information, and the terminal type information is used for early identification of the terminal.

In an embodiment, the terminal is one or more of:
a reduced capability (Redcap) terminal; or
a preset version of a new radio (NR) terminal.

In an embodiment, the preset mode is one or more of:
a first mode of sending by the terminal the terminal type information to the base station through a first random access message (msg1) in a four-step random access procedure;
a second mode of sending by the terminal the terminal type information to the base station through a third random access message (msg3) in a four-step random access procedure;
a third mode of sending by the terminal the terminal type information to the base station through a random access message (msgA) of a physical random access channel (PRACH) in a two-step random access procedure;
a fourth mode of sending by the terminal the terminal type information to the base station through an msgA of a physical uplink shared channel (PUSCH) in a two-step random access procedure; or
a fifth mode of sending by the terminal the terminal type information to the base station through a fifth message (msg5) in a random access procedure.

In an embodiment, the msg1 is configured to indicate a preset random access resource, and/or, the msgA of the PRACH in the two-step random access procedure is configured to indicate a preset random access resource; in which the preset random access resource is configured by the base station.

According to a third aspect of embodiments of the disclosure, an early identification apparatus is provided. The apparatus includes:
a determining module, configured to determine a preset mode for terminal type information, the preset mode being a mode for sending the terminal type information; and
a receiving module, configured to receive the terminal type information sent by a terminal, the terminal type information being used for early identification of the terminal.

According to a fourth aspect of embodiments of the disclosure, an early identification apparatus is provided. The apparatus includes:
a sending module, configured to send terminal type information to a base station based on a preset mode determined by the base station, in which the preset mode is a mode for sending the terminal type information, and the terminal type information is used for early identification of the terminal.

According to a fifth aspect of embodiments of the disclosure, a communication device is provided. The communication device includes:
a processor; and
a memory for storing instructions executable by the processor;
in which the processor is configured to execute the executable instructions to implement the method described in any embodiment of the disclosure.

According to a sixth aspect of embodiments of the disclosure, a computer storage medium having computer-executable programs stored thereon is provided. When the computer-executable instructions are executed by a processor, the method described in any embodiment of the disclosure is implemented.

In embodiments of the disclosure, the preset mode for the terminal type information is determined, the preset mode being a mode for sending the terminal type information. The terminal type information sent by a terminal is received, the terminal type information being used for early identification of the terminal. Since the base station determines the preset mode for sending the terminal type information, the terminal that needs to be identified early sends the terminal type information to the base station based on the preset mode. Compared with the method in which the terminal type information can only be sent after a radio resource control (RRC) connection is established, the terminal type can be identified early based on the preset mode in this method, and thus terminal configuration operations can be performed accurately and reliably for different types of terminals.

### BRIEF DESCRIPTION OF THE DRAWINGS

FIG. 1 is a structural diagram illustrating a wireless communication system according to an embodiment.
FIG. 2 is a flowchart illustrating an early identification method according to an embodiment.
FIG. 3 is a flowchart illustrating an early identification method according to an embodiment.
FIG. 4 is a flowchart illustrating an early identification method according to an embodiment.
FIG. 5 is a flowchart illustrating an early identification method according to an embodiment.
FIG. 6 is a flowchart illustrating an early identification method according to an embodiment.
FIG. 7 is a flowchart illustrating an early identification method according to an embodiment.
FIG. 8 is a flowchart illustrating an early identification method according to an embodiment.
FIG. 9 is a flowchart illustrating an early identification method according to an embodiment.
FIG. 10 is a flowchart illustrating an early identification method according to an embodiment.
FIG. 11 is a flowchart illustrating an early identification method according to an embodiment.
FIG. 12 is a block diagram illustrating an early identification apparatus according to an embodiment.
FIG. 13 is a block diagram illustrating an early identification apparatus according to an embodiment.
FIG. 14 is a block diagram illustrating an early identification apparatus according to an embodiment.
FIG. 15 is a block diagram illustrating a terminal according to an embodiment.
FIG. 16 is a block diagram illustrating a base station according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein may be interpreted as "when", "while" or "in response to determining".

For the purposes of brevity and ease of understanding, the terms "greater than" or "less than" are used herein to characterize size relationships. However, it can be understood by those skilled in the art that the term "greater than" also covers the meaning of "greater than or equal to", and "less than" also covers the meaning of "less than or equal to".

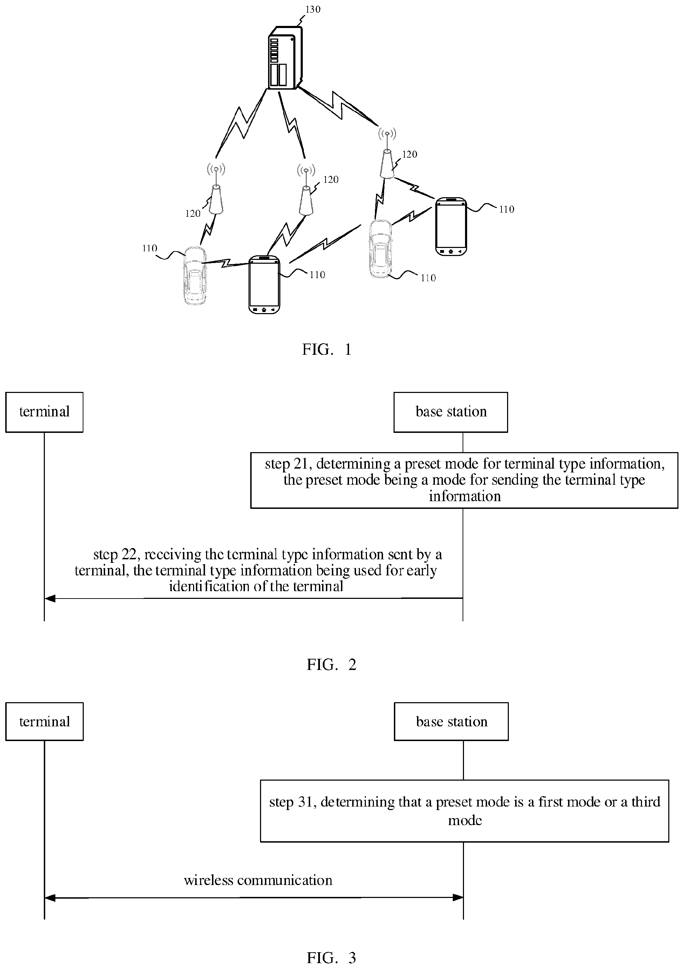

FIG. 1 is a schematic diagram illustrating a wireless communication system according to an embodiment. As illustrated in FIG. 1, the wireless communication system is a communication system based on the mobile communication technology. The wireless communication system may include: a plurality of user equipments (UEs) 110 and a plurality of base stations 120.

The UE 110 may be a device that provides voice and/or data connectivity to a user. The UE 110 may communicate with one or more core networks via a radio access network (RAN). The UE 110 may be an Internet of Things (IoT) UE, such as a sensor device, a cell phone, and a computer with the IoT UE. Or, the UE 110 may be a stationary, portable, pocket-sized, handheld, computer-built, or vehicle-mounted device, such as, a station (STA), a subscriber unit, a subscriber station, a mobile station, a mobile, a remote station, an access point, a remote terminal, an access terminal, a user terminal, a user agent, a user device, or a UE. Or, the UE 110 may be an unmanned aerial vehicle device. Or, the UE 110 may be an in-vehicle device, for example, an electronic control unit having a wireless communication function or a wireless communication device external to the electronic control unit. Or, the UE 110 may be a roadside device, for example, a street light, a signal light, or other roadside devices having a wireless communication function.

The base station 120 may be a network side device in the wireless communication system. The wireless communication system may be the 4th Generation (4G) mobile communication system, also known as Long Term Evolution (LTE) system. Or, the wireless communication system may also be a 5G system, also known as New Radio (NR) system or 5G NR system. Or, the wireless communication system may be any next generation system of the 5G system. The access network in the 5G system may be called New Generation-RAN (NG-RAN).

The base station 120 may be an evolved base station (eNB) employed in the 4G system. Or, the base station 120 may be a base station (gNB) with a centralized distributed architecture employed in the 5G system. When the base station 120 adopts the centralized-distributed architecture, the base station 120 usually includes a central unit (CU) and at least two distributed units (DUs). The CU is equipped with a protocol stack of a Packet Data Convergence Protocol (PDCP) layer, a Radio Link Control (RLC) layer, and a Media Access Control (MAC) layer. The DU is equipped with a protocol stack of a physical (PHY) layer. The specific implementation of the base station 120 is not limited in embodiments of the disclosure.

A wireless connection is established between the base station 120 and the UE 110 via a wireless air interface. In different implementations, the wireless air interface is a wireless air interface based on the 4G standard. Or, the wireless air interface is a wireless air interface based on the 5G standard, such as a NR. Or, the wireless air interface may be a wireless air interface based on the standard of the next generation of 5G.

In some embodiments, End to End (E2E) connections are established between the UEs 110 in scenarios, such as, Vehicle to Vehicle (V2V) communication, Vehicle to Infrastructure (V2I) communication, and Vehicle to Pedestrian (V2P) communication in Vehicle to Everything (V2X) communication.

The above UE may be considered to be the terminal device in the following embodiments.

In some embodiments, the above wireless communication system may also include a network management device 130.

The plurality of base stations 120 are connected to the network management device 130 respectively. The network management device 130 may be a core network device in the wireless communication system. For example, the network management device 130 is a Mobility Management Entity (MME) in an Evolved Packet Core (EPC). Or, the network management device may be another core network device, such as a Serving GateWay (SGW), a Public Data Network GateWay (PGW), a Policy and Charging Rules Function (PCRF), or a Home Subscriber Server (HSS), etc. The implementation form of the network management device 130 is not limited in embodiments of the disclosure.

In order to facilitate understanding of those skilled in the art, the embodiments of the disclosure list multiple implementations to clearly illustrate the technical solutions of the embodiments of the disclosure. Certainly, those skilled in the art understand that the embodiments of the disclosure can be executed individually, or can be executed together with other method embodiments in the embodiments of the disclosure, or can be executed alone or in combination with some methods in other related arts, which is not limited in the embodiments of the disclosure.

In order to better understand the technical solutions in any of the embodiments of the disclosure, an application scenario in the related art will be described first.

In order to distinguish a reduced capability (Redcap) terminal from ordinary terminals, the network needs to identify the Redcap terminal early.

In an embodiment, during an initial access, the Redcap terminal reports its terminal type to the network.

In an embodiment, scheduling in a random access channel (RACH) is facilitated, for example, scheduling an uplink or downlink bandwidth part (BWP) in a suitable initial uplink or downlink BWP.

In an embodiment, early identification may be performed using a first random access message (msg1) in a four-step random access procedure or a random access message (msgA) of a physical random access channel (PRACH) in a two-step random access procedure.

In an embodiment, early identification may be performed using a third random access message (msg3) in a four-step random access procedure or a random access message (msgA) of a physical uplink shared channel (PUSCH) in a two-step random access procedure.

In an embodiment, whether to enable early identification or which early identification method to adopt depends on the network.

In an embodiment, in terms of media access control (MAC), when the Msg3 contains common control channel (CCCH) data, the RedCap terminal uses a dedicated logical channel ID (LCID) to perform Msg3 early identification.

In an embodiment, for the Msg3 early identification, two reserved LCIDs are used for CCCH and CCCH1 respectively.

In an embodiment, for a four-step random access, early identification may be based on the msg1 or the msg3. Enabling of early identification based on the msg1 or the msg3 is configurable by the network. The network separately configures random access resources for the Redcap terminal, to implicitly indicate the early identification based on the msg1.

In an embodiment, for the Redcap terminal, the number of starting paging transmission window (PTW) positions of extended Discontinuous Reception (eDRX) is adjusted to 8.

In an embodiment, when the core network receives a registration request initiated by the terminal, it also receives an eDRX parameter allocation request from the terminal. From the perspective of a wireless interface, the message is carried in a fifth message (msg5) and sent to the core network. In this case, the terminal does not report its capability. If the core network can obtain the type of the terminal before obtaining the terminal capability, the allocation of eDRX parameters is facilitated. Therefore, it is desirable to enable the core network to obtain the terminal type in advance.

FIG. 2 is a flowchart illustrating an early identification method according to an embodiment. The method is performed by a base station. The method includes the following steps.

At step 21, a preset mode for terminal type information is determined, in which the preset mode is a mode for sending the terminal type information.

At step 22, the terminal type information sent by a terminal is received, in which the terminal type information is used for early identification of the terminal.

The terminal involved in the disclosure includes but is not limited to a mobile phone, a wearable device, a vehicle-mounted terminal, a road side unit (RSU), a smart home terminal, an industrial sensor device and/or a medical device, etc. In some embodiments, the terminal may be a Redcap terminal or a preset version of a new radio (NR) terminal (e.g., an R17 NR terminal).

The base station involved in the disclosure may be an access device for the terminal to access a network. The base station can be various types of base stations, for example, a base station of a third generation (3G) mobile communication network, a base station of a 4G mobile communication network, a base station of a 5G mobile communication network, or other evolved base stations.

In an embodiment, the base station determines a preset mode for sending the terminal type information. The terminal type information indicates that the terminal is a terminal that needs to be early identified. Therefore, the terminal may send the terminal type information to the base station based on the preset mode before initiating a registration request. The base station receives the terminal type information sent by the terminal. The terminal type information is used for early identification of the terminal. When the network (e.g., the core network) receives the registration request initiated by the terminal and the eDRX parameter allocation request from the terminal, the eDRX parameters can be configured based on the terminal type determined based on the terminal type information.

In an embodiment, the preset mode for sending the terminal type information is determined. The terminal type information indicates that the terminal is a terminal that needs to be early identified. Indication information that indicates the preset mode is sent to the terminal. After receiving the indication information, the terminal sends the terminal type information to the base station based on the preset mode indicated by the indication information.

In an embodiment, it is determined that the terminal type information is received by a first mode. The first mode is a mode of receiving the terminal type information sent by the terminal through a first random access message msg1 in a four-step random access procedure. Indication information that indicates the first mode is sent to the terminal. After receiving the indication information, the terminal sends the terminal type information to the base station via the msg1 during the random access procedure.

In an embodiment, it is determined that the terminal type information is received by a second mode. The second mode is a mode of receiving the terminal type information sent by the terminal through a third random access message msg3 in a four-step random access procedure. Indication information that indicates the second mode is sent to the terminal. After receiving the indication information, the terminal sends the terminal type information to the base station via the msg3 during the random access procedure.

In an embodiment, it is determined that the terminal type information is received by a third mode. The third mode is a mode of sending the terminal type information to the base station through a random access message msgA of a PRACH in a two-step random access procedure. Indication information that indicates the third mode is sent to the terminal. After receiving the indication information, the terminal sends the terminal type information to the base station via the msgA of the PRACH during the random access procedure.

In an embodiment, it is determined that the terminal type information is received by a fourth mode. The fourth mode is a mode of sending the terminal type information to the base station through a random access message msgA of a PUSCH in a two-step random access procedure. Indication information that indicates the third mode is sent to the terminal. After receiving the indication information, the terminal sends the terminal type information to the base station via the msgA sent based on the PUSCH during the random access procedure.

In an embodiment, it is determined that the terminal type information is received by a fifth mode. The fifth mode is a mode of receiving the terminal type information through a message msg5 in a random access procedure. Indication information that indicates the fifth mode is sent to the terminal. After receiving the indication information, the terminal sends the terminal type information to the base station via the msg5 during the random access procedure.

In an embodiment, the preset mode for the terminal to send the terminal type information to the base station is determined. The terminal type information indicates that the terminal is a terminal that needs to be early identified. Indication information that indicates the preset mode is sent to the terminal. After receiving the indication information, the terminal can send the terminal type information to the base station based on the preset mode indicated by the indication information. After receiving the terminal type information, the base station determines that the terminal is a terminal that needs to be early identified based on the terminal type information, and sends a notification message to the core network device. The notification message indicates that the terminal is a terminal that needs to be early identified.

In an embodiment of the disclosure, the preset mode for the terminal to send the terminal type information to the base station is determined. The terminal type information indicates that the terminal is a terminal that needs to be early identified. Since the base station may determine the preset mode for sending the terminal type information to the base station, the terminal that needs to be early identified may send the terminal type information to the base station based on the preset mode. Compared with the method in which the terminal type information can only be sent after a radio resource control (RRC) connection is established, the terminal type can be identified early based on the preset mode in this method, and thus terminal configuration operations can be performed accurately and reliably for different types of terminals.

It is noted that those skilled in the art understand that the method of these embodiments of the disclosure may be performed alone or in combination with some of the methods in the embodiments of the disclosure or some of the methods in the related art.

In some embodiments, the preset mode is one or more of the following:
a first mode of receiving the terminal type information sent by the terminal through an msg1 in a four-step random access procedure;
a second mode of receiving the terminal type information sent by the terminal through an msg3 in a four-step random access procedure;
a third mode of receiving the terminal type information sent by the terminal through an msgA of a PRACH in a two-step random access procedure;
a fourth mode of receiving the terminal type information sent by the terminal through an msgA of a PUSCH in a two-step random access procedure; and
a fifth mode of receiving the terminal type information sent by the terminal through an msg5 in a random access procedure.

FIG. 3 is a flowchart illustrating an early identification method according to an embodiment. The method is performed by a base station. The method includes the following steps.

At step 31, it is determined that a preset mode is a first mode or a third mode.

The preset mode is a mode in which a terminal sends terminal type information to the base station. The terminal type information indicates that the terminal is a terminal that needs to be early identified.

In an embodiment, the msg1 is used to indicate a preset random access resource, and/or, the msgA of the PRACH in the two-step random access procedure is used to indicate a preset random access resource. The preset random access resource is configured by the base station.

In an embodiment, it is determined that the terminal type information sent by the terminal is received by the first mode. The first mode is a mode of receiving the terminal type information sent by the terminal through an msg1 in a four-step random access procedure. Indication information that indicates the first mode is sent to the terminal. After receiving the indication information, the terminal sends the terminal type information to the base station via the msg1 during the random access procedure. The terminal type information may be indicated by a preset random access resource. The msg1 may carry the preset random access resource, which is a resource configured by the base station. In this way, the base station can determine the type of the terminal based on the received preset random access resource after receiving the preset random access resource. The preset random access resource may be a preamble code and/or a PRACH occasion (RO), etc.

In an embodiment, it is determined that the terminal type information sent by the terminal is received by the third mode. The third mode is a mode of receiving the terminal type information sent by the terminal through a random access message msgA of a PRACH in a two-step random access procedure. Indication information that indicates the third mode is sent to the terminal. After receiving the indication information, the terminal sends the terminal type information to the base station via the msgA sent based on the PRACH during the random access procedure. The terminal type information may be indicated by a preset random access resource. The msgA may carry the preset random access resource, which is a resource configured by the base station. In this way, the base station can determine the type of the terminal based on the received preset random access resource after receiving the preset random access resource. The preset random access resource may be a preamble code and/or a PRACH occasion (RO), etc.

It is noted that those skilled in the art understand that the method of these embodiments of the disclosure may be performed alone or in combination with some of the methods in the embodiments of the disclosure or some of the methods in the related art.

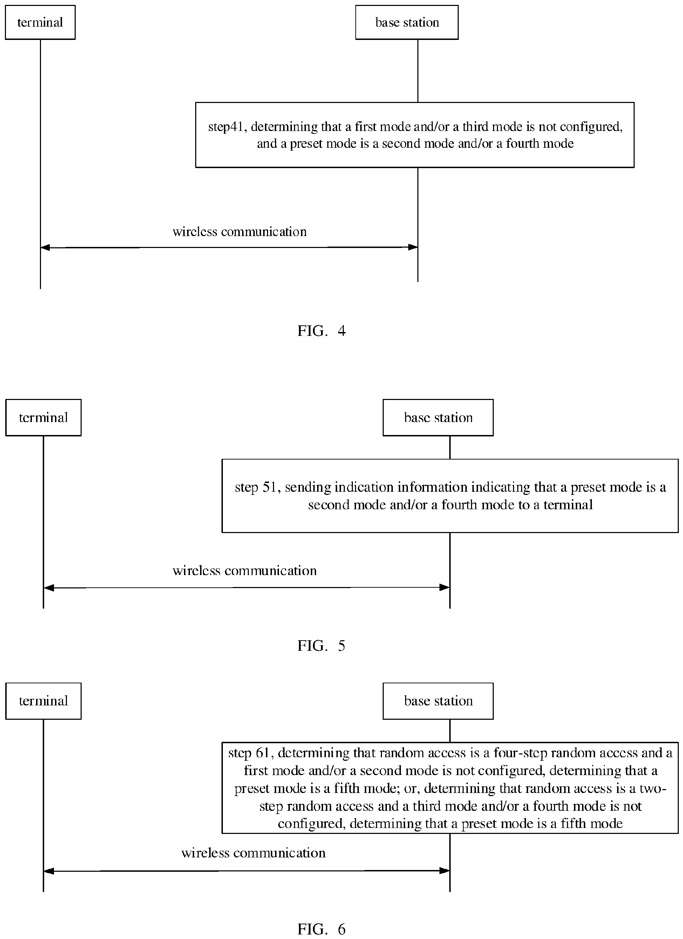

FIG. 4 is a flowchart illustrating an early identification method according to an embodiment. The method is performed by a base station. The method includes the following steps.

At step 41, it is determined that a first mode and/or a third mode is not configured, and a preset mode is a second mode and/or a fourth mode.

In an embodiment, it is determined that the first mode is not configured and the preset mode is the second mode.

In an embodiment, it is determined that it is not configured to receive the terminal type information sent by the terminal via an msg1 in a four-step random access procedure, and that the preset mode is receiving the terminal type information sent by the terminal via an msg3 in a four-step random access procedure. Indication information that indicates the second mode is sent to the terminal. After receiving the indication information, the terminal may send the terminal type information to the base station via the msg3 during the random access procedure.

In an embodiment, it is determined that the third mode is not configured and the preset mode is the fourth mode.

In an embodiment, it is determined that the terminal is not configured to send the terminal type information to the base station via an msgA sent based on a PRACH in a two-step random access procedure, and that the preset mode is receiving the terminal type information sent by the terminal via an msgA of a PUSCH in a two-step random access procedure. Indication information that indicates the fourth mode is sent to the terminal. After receiving the indication information, the terminal may send the terminal type information to the base station via the msgA of the PRACH during the random access procedure.

In an embodiment, the indication information may be sent to the terminal via a dedicated signaling (e.g., a RRC signaling) or broadcast signaling.

It is noted that those skilled in the art understand that the method of these embodiments of the disclosure may be performed alone or in combination with some of the methods in the embodiments of the disclosure or some of the methods in the related art.

FIG. 5 is a flowchart illustrating an early identification method according to an embodiment. The method is performed by a base station. The method includes the following steps.

At step 51, indication information indicating that a preset mode is a second mode and/or a fourth mode is sent to a terminal.

The second mode is receiving terminal type information sent by the terminal via an msg3 in a four-step random access procedure. The fourth mode is receiving the terminal type information sent by the terminal via an msgA of a PUSCH in a two-step random access procedure.

In an embodiment, it is determined that the preset mode is receiving the terminal type information sent by the terminal via an msg3 in a four-step random access procedure. Indication information that indicates the second mode is sent to the terminal. After receiving the indication information, the terminal may send the terminal type information to the base station via the msg3 during the random access procedure.

In an embodiment, it is determined that the preset mode is receiving the terminal type information sent by the terminal via an msgA of a PUSCH in a two-step random access procedure. Indication information that indicates the fourth mode is sent to the terminal. After receiving the indication information, the terminal may send the terminal type information to the base station via the msgA of the PUSCH during the random access procedure.

It is noted that those skilled in the art understand that the method of these embodiments of the disclosure may be performed alone or in combination with some of the methods in the embodiments of the disclosure or some of the methods in the related art.

FIG. 6 is a flowchart illustrating an early identification method according to an embodiment. The method is performed by a base station. The method includes the following steps.

At step 61, it is determined that random access is a four-step random access and a first mode and/or a second mode is not configured, it is determined that a preset mode is a fifth mode; or, it is determined that random access is a two-step random access and a third mode and/or a fourth mode is not configured, it is determined that a preset mode is a fifth mode.

The terminal may be a Redcap terminal or an R17 terminal.

The first mode is receiving the terminal type information sent by the terminal through an msg1 in a four-step random access procedure. The second mode is receiving the terminal type information sent by the terminal through an msg3 in a four-step random access procedure. The third mode is receiving the terminal type information sent by the terminal through an msgA of a PRACH in a two-step random access procedure. The fourth mode is receiving the terminal type information sent by the terminal through an msgA of a PUSCH in a two-step random access procedure. The fifth mode is receiving the terminal type information sent by the terminal through an msg5 in a random access procedure.

In an embodiment, it is determined that random access is the four-step random access and the first mode and/or the second mode is not configured, it is determined that the preset mode is the fifth mode. Indication information that indicates the fifth mode is sent to the terminal. After receiving the indication information, the terminal may send the terminal type information to the base station via the msg5 during the random access procedure. The base station determines the type of the terminal based on the terminal type information.

In an embodiment, it is determined that random access is the two-step random access and the third mode and/or the fourth mode is not configured, it is determined that the preset mode is the fifth mode. Indication information that indicates the fifth mode is sent to the terminal. After receiving the indication information, the terminal may send the terminal type information to the base station via the msg5 during the random access procedure. The base station determines the type of the terminal based on the terminal type information.

In an embodiment, for an ordinary R17 terminal, there is no problem of early identification by the msg1 or the msg3, so the terminal type still needs to be identified in the fifth mode.

In an embodiment, the msg5 is an RRC connection establishment completion message.

In an embodiment, if a Resume procedure is successfully completed, it means that the base station has successfully acquired the context of the terminal and determined the terminal type. The msg5 is a connection establishment and resume completion message that does not need to carry the terminal type information.

It is noted that those skilled in the art understand that the method of these embodiments of the disclosure may be performed alone or in combination with some of the methods in the embodiments of the disclosure or some of the methods in the related art.

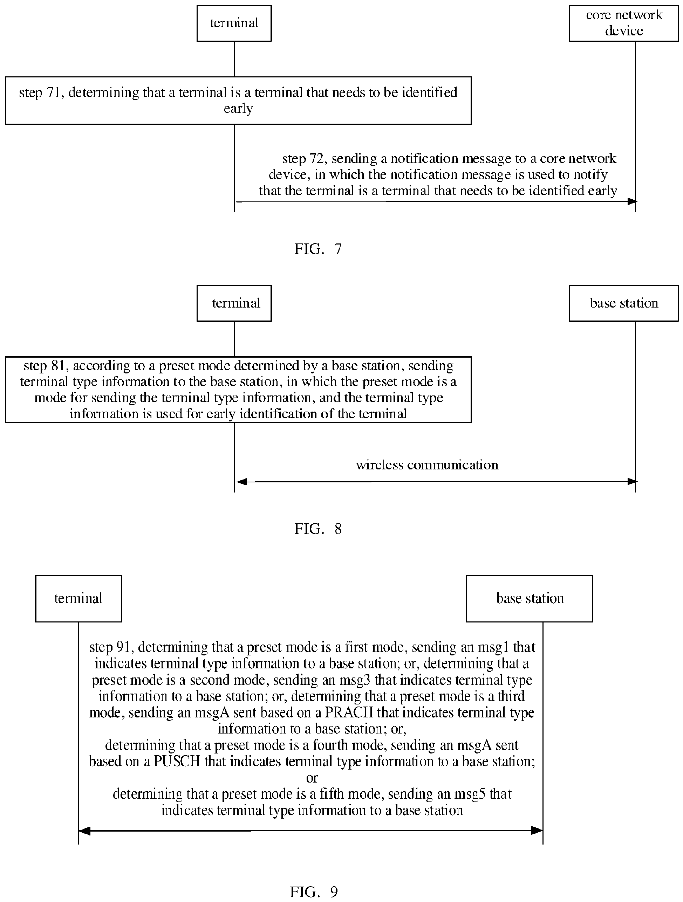

FIG. 7 is a flowchart illustrating an early identification method according to an embodiment. The method is performed by a base station. The method includes the following steps.

At step 71, it is determined that a terminal is a terminal that needs to be identified early.

At step 72, a notification message is sent to a core network device, in which the notification message is used to notify that the terminal is a terminal that needs to be identified early.

In an embodiment, terminal type information sent by the terminal based on a preset mode is received. The terminal is determined to be a terminal that needs to be identified early based on the terminal type information. The notification message is sent to a core network device, in which the notification message indicates that the terminal is a terminal that needs to be identified early.

In an embodiment, the notification message may be an initial terminal message between the base station and the core network. The initial terminal message may carry information that indicates the terminal type.

The preset mode is one or more of the following:
a first mode of sending by the terminal the terminal type information to the base station through an msg1 in a four-step random access procedure;
a second mode of sending by the terminal the terminal type information to the base station through an msg3 in a four-step random access procedure;
a third mode of sending by the terminal the terminal type information to the base station through an msgA of a PRACH in a two-step random access procedure;
a fourth mode of sending by the terminal the terminal type information to the base station through a msgA of a PUSCH in a two-step random access procedure; and
a fifth mode of sending by the terminal the terminal type information to the base station through an msg5 in a random access procedure.

It is noted that those skilled in the art understand that the method of these embodiments of the disclosure may be performed alone or in combination with some of the methods in the embodiments of the disclosure or some of the methods in the related art.

FIG. 8 is a flowchart illustrating an early identification method according to an embodiment. The method is performed by a terminal. The method includes the following steps.

At step 81, based on a preset mode determined by a base station, terminal type information is sent to the base station, in which the preset mode is a mode for sending the terminal type information, and the terminal type information is used for early identification of the terminal.

The terminal involved in the disclosure includes but is not limited to a mobile phone, a wearable device, a vehicle-mounted terminal, a RSU, a smart home terminal, an industrial sensor device and/or a medical device, etc. In some embodiments, the terminal may be a Redcap terminal or a preset version of a NR terminal (e.g., an R17 NR terminal).

The network device involved in the disclosure may be an access device for a terminal to access a network. The network device may be various types of base stations, e.g., a base station of a 3G mobile communication network, a base station of a 4G mobile communication network, a base station of a 5G mobile communication network, or other evolved base stations. It should be noted that the network device in the disclosure is not limited to a base station in an access network, but may also be a communication node in a core network, which is not limited herein. For example, the determining and/or configuring operations in the disclosure may also be performed by the network device in the core network.

In an embodiment, the terminal sends the terminal type information to the base station before initiating a registration request according to the preset mode determined by the base station. The preset mode is a mode for the terminal to send the terminal type information to the base station, and the terminal type information indicates that the terminal is a terminal that needs to be identified early.

In an embodiment, the base station determines the preset mode for sending the terminal type information to the base station. The terminal type information indicates that the terminal is a terminal that needs to be identified early. Therefore, the terminal may send the terminal type information to the base station based on the preset mode before initiating the registration request. The base station receives the terminal type information sent by the terminal. The terminal type information is used for early identification of the terminal. When the network (e.g., the core network) receives the registration request initiated by the terminal and the eDRX parameter allocation request from the terminal, the eDRX parameters can be configured based on the terminal type determined based on the terminal type information.

In an embodiment, the base station determines the preset mode for the terminal to send the terminal type information to the base station. The terminal type information indicates that the terminal is a terminal that needs to be identified early. The terminal receives indication information that indicates the preset mode sent by the base station. After receiving the indication information, the terminal sends the terminal type information to the base station based on the preset mode indicated by the indication information.

In an embodiment, if the indication information indicates that the terminal sends the terminal type information to the base station via a first mode, in which the first mode is a mode for the terminal to send the terminal type information to the base station through an msg1 in a four-step random access procedure, after receiving the indication information, the terminal sends the terminal type information to the base station via the msg1 during the random access procedure.

In an embodiment, if the indication information indicates that the terminal sends the terminal type information to the base station via a second mode, in which the second mode is a mode for the terminal to send the terminal type information to the base station through an msg3 in a four-step random access procedure, after receiving the indication information, the terminal sends the terminal type information to the base station via the msg3 during the random access procedure.

In an embodiment, if the indication information indicates that the terminal sends the terminal type information to the base station via a third mode, in which the third mode is a mode for the terminal to send the terminal type information to the base station through an msgA of a PRACH in a two-step random access procedure, after receiving the indication information, the terminal sends the terminal type information to the base station via the msgA sent based on the PRACH during the random access procedure.

In an embodiment, if the indication information indicates that the terminal sends the terminal type information to the base station via a fourth mode, in which the fourth mode is a mode for the terminal to send the terminal type information to the base station through an msgA of a PUSCH in a two-step random access procedure, after receiving the indication information, the terminal sends the terminal type information to the base station via the msgA sent based on the PUSCH during the random access procedure.

In an embodiment, if the indication information indicates that the terminal sends the terminal type information to the base station via a fifth mode, in which the fifth mode is a mode for the terminal to send the terminal type information to the base station through an msg5 in a random access procedure, after receiving the indication information, the terminal sends the terminal type information to the base station via the msg5 during the random access procedure.

In an embodiment, the base station determines the preset mode for the terminal to send the terminal type information to the base station. The terminal type information indicates that the terminal is a terminal that needs to be identified early. The base station sends the indication information that indicates the preset mode to the terminal. After receiving the indication information, the terminal can send the terminal type information to the base station based on the preset mode indicated by the indication information. After receiving the terminal type information, the base station determines that the terminal is a terminal that needs to be identified early based on the terminal type information, and sends a notification message to the core network device. The notification message indicates that the terminal is a terminal that needs to be identified early.

It is noted that those skilled in the art understand that the method of these embodiments of the disclosure may be performed alone or in combination with some of the methods in the embodiments of the disclosure or some of the methods in the related art.

In some embodiments, the preset mode is at least one of the following:
a first mode for the terminal to send the terminal type information to the base station through an msg1 in a four-step random access procedure;
a second mode for the terminal to send the terminal type information to the base station through an msg3 in a four-step random access procedure;
a third mode for the terminal to send the terminal type information to the base station through an msgA of a PRACH in a two-step random access procedure;
a fourth mode for the terminal to send the terminal type information to the base station through an msgA of a PUSCH in a two-step random access procedure; or
a fifth mode for the terminal to send the terminal type information to the base station through an msg5 in a random access procedure.

FIG. 9 is a flowchart illustrating an early identification method according to an embodiment. The method is performed by a terminal. The method includes the following steps.

At step 91, it is determined that a preset mode is a first mode, an msg1 that indicates terminal type information is sent to a base station; or,
it is determined that a preset mode is a second mode, an msg3 that indicates terminal type information is sent to a base station; or,
it is determined that a preset mode is a third mode, an msgA sent based on a PRACH that indicates terminal type information is sent to a base station; or,
it is determined that a preset mode is a fourth mode, an msgA sent based on a PUSCH that indicates terminal type information is sent to a base station;
it is determined that a preset mode is a fifth mode, an msg5 that indicates terminal type information is sent to a base station.

In an embodiment, the msg1 is used to indicate a preset random access resource, and/or, the msgA of the PRACH in the two-step random access procedure is used to indicate a preset random access resource. The preset random access resource is configured by the base station.

In an embodiment, the base station determines that the terminal sends the terminal type information to the base station via the first mode that is a mode for the terminal to send the terminal type information to the base station through an msg1 in a four-step random access procedure. The base station sends indication information that indicates the first mode to the terminal. After receiving the indication information, the terminal determines that the preset mode is the first mode, and then send the terminal type information to the base station via the msg1 during the random access procedure.

The terminal type information may be indicated by a preset random access resource. The msg1 may carry the preset random access resource, which is a resource configured by the base station. In this way, after receiving the preset random access resource, the base station can determine the type of the terminal based on the received preset random access resource. The preset random access resource may be a preamble code and/or a RO, etc.

In an embodiment, the base station determines that the terminal sends the terminal type information to the base station via the second mode that is a mode for the terminal to send the terminal type information to the base station through an msg3 in a four-step random access procedure. The base station sends indication information that indicates the second mode to the terminal. After receiving the indication information, the terminal determines that the preset mode is the second mode, and then send the terminal type information to the base station via the msg3 during the random access procedure.

In an embodiment, the base station determines that the terminal sends the terminal type information to the base station via the third mode that is a mode for the terminal to send the terminal type information to the base station through an msgA of a PRACH in a two-step random access procedure. The base station sends indication information that indicates the third mode to the terminal. After receiving the indication information, the terminal determines that the preset mode is the third mode, and then send the terminal type information to the base station via the msgA sent based on the PRACH during the random access procedure.

The terminal type information may be indicated by a preset random access resource. The msgA may carry the preset random access resource, which is a resource configured by the base station. In this way, after receiving the preset random access resource, the base station can determine the type of the terminal based on the received preset random access resource. The preset random access resource may be a preamble code and/or a RO, etc.

In an embodiment, the base station determines that the terminal sends the terminal type information to the base station via the fourth mode that is a mode for the terminal to send the terminal type information to the base station through an msgA of a PUSCH in a two-step random access procedure. The base station sends indication information that indicates the third mode to the terminal. After receiving the indication information, the terminal determines that the preset mode is the fourth mode, and then send the terminal type information to the base station via the msgA sent based on the PUSCH during the random access procedure.

In an embodiment, the base station determines that the terminal sends the terminal type information to the base station via the fifth mode that is a mode for the terminal to send the terminal type information to the base station through an msg5 in a random access procedure. The base station sends indication information that indicates the fifth mode to the terminal. After receiving the indication information, the terminal determines that the preset mode is the fifth mode, and then send the terminal type information to the base station via the msg5 during the random access procedure.

It is noted that those skilled in the art understand that the method of these embodiments of the disclosure may be performed alone or in combination with some of the methods in the embodiments of the disclosure or some of the methods in the related art.

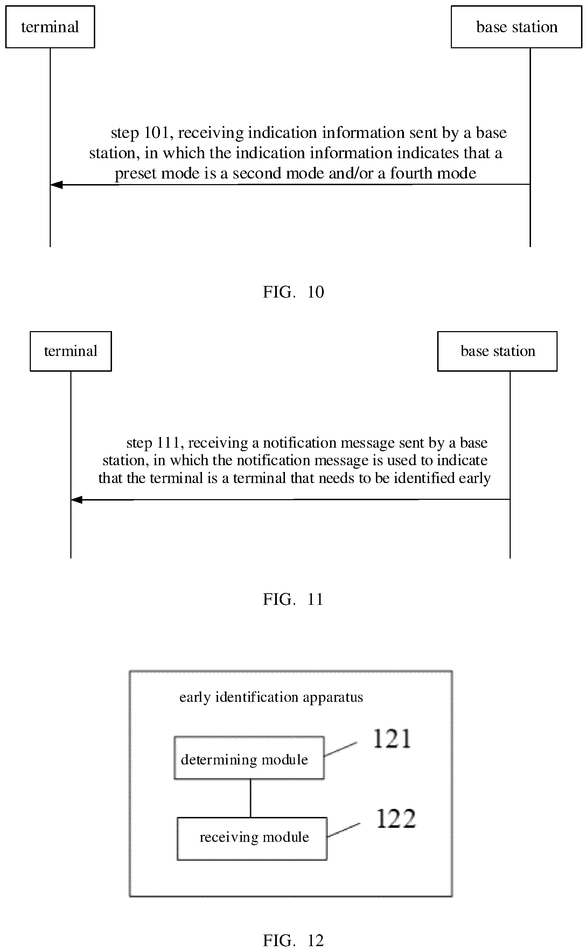

FIG. 10 is a flowchart illustrating an early identification method according to an embodiment. The method is performed by a terminal. The method includes the following steps.

At step 101, indication information sent by a base station is received, in which the indication information indicates that a preset mode is a second mode and/or a fourth mode.

The second mode is a mode for the terminal to send terminal type information to the base station via an msg3 in a four-step random access procedure. The fourth mode is a mode for the terminal to send the terminal type information to the base station via an msgA sent based on a PUSCH in a two-step random access procedure.

In an embodiment, the base station determines that the preset mode is a mode for the terminal to send the terminal type information to the base station via an msg3 in a four-step random access procedure. The base station sends indication information that indicates the second mode to the terminal. After receiving the indication information, the terminal may send the terminal type information to the base station via the msg3 during the random access procedure.

In an embodiment, the base station determines that the preset mode is a mode for the terminal to send the terminal type information to the base station via an msgA of a PUSCH in a two-step random access procedure. The base station sends indication information that indicates the fourth mode to the terminal. After receiving the indication information, the terminal may send the terminal type information to the base station via the msgA sent based on the PUSCH during the random access procedure.

It is noted that those skilled in the art understand that the method of these embodiments of the disclosure may be performed alone or in combination with some of the methods in the embodiments of the disclosure or some of the methods in the related art.

FIG. 11 is a flowchart illustrating an early identification method according to an embodiment. The method is performed by a core network device. The method includes the following steps.

At step 111, a notification message sent by a base station is received, in which the notification message is used to indicate that a terminal is a terminal that needs to be identified early.

In an embodiment, the base station receives terminal type information sent by the terminal based on a preset mode. Based on the terminal type information, the base station determines that the terminal is a terminal that needs to be identified early. The base station sends a notification message to the core network device, the notification message indicates that the terminal is a terminal that needs to be identified early. The core network device receives the notification message sent by the base station indicating that the terminal is a terminal that needs to be identified early.

It is noted that those skilled in the art understand that the method of these embodiments of the disclosure may be performed alone or in combination with some of the methods in the embodiments of the disclosure or some of the methods in the related art.

In order to better understand the embodiments of the disclosure, the solutions of the disclosure are illustrated below by way of exemplary embodiments.

In an embodiment, the disclosure protects a way of configuring early identification (or user type identification) for a specific type of terminal.

In an embodiment, the terminal is a Redcap terminal.

In an embodiment, the terminal is a specific version of terminal such as a R17 NR terminal.

In an embodiment, the early identification of the specific type of terminal is performed via an msg1 or an msg3 (for 4-step RACH), or an msgA PRACH or an msgA PUSCH (for 2-step RACH).

In an embodiment, the base station may only configure an msg1 or msgA PRACH early identification for the terminal.

In an embodiment, the base station can obtain the capability of the terminal based on early identification through the msg1 or the msgA during the random access procedure by allocating specific PRACH resources (including a preamble code, a RO, etc.) to the Redcap terminal. When the user accesses, the base station can know that it is a Redcap terminal.

In an embodiment, if the base station does not configure the msg1 or msgA PRACH early identification for the terminal, the base station needs to configure an msg3 or msgA PUSCH early identification.

In an embodiment, the msg3 or msgA PUSCH early identification is notified to the user using a dedicated signaling or broadcast signaling.

In an embodiment, early identification of a specific type of terminal is performed via the msg5.

In an embodiment, the type information of the specific type of terminal is carried in the msg5, such as a Redcap user.

In an embodiment, for 4-step RACH:
for a Redcap user, if the msg1 or msg3 is not configured for early identification, identification is performed via the msg5; for a Redcap user, if the msg1 or msg3 is configured for early identification, identification does not need to be performed via the msg5.

In an embodiment, for 2-step RACH:
for a Redcap user, if msgA PRACH or msgA PUSCH early identification is not configured, identification needs to be performed via the msg5; for a Redcap user, if msgA PRACH or msgA PUSCH is configured for early identification, identification does not need to be performed via the msg5.

In an embodiment, the type information of a specific type of terminal is carried in the msg5, such as an R17 version user.

For an R17 normal user, there is no problem of configuring msg1 or msg3 for early identification, so it is still necessary to perform user type identification via the msg5.

In an embodiment, the msg5 is an RRC connection establishment completion message.

Further, the msg5 is a RRC resume completion message that does not carry the type information of a specific type of terminal. Since the resume procedure has been successfully completed, it means that the base station has successfully acquired the terminal context, the base station already knows the terminal type information.

In an embodiment, the base station performs early identification for a specific type of terminal and then informs the core network.

In an embodiment, an initial UE message between the base station and the core network may carry the early identification information for the terminal (this mode does not have to depend on reporting of the UE capability).

FIG. 12 is a block diagram illustrating an early identification apparatus according to an embodiment. The apparatus includes a determining module 121, and a receiving module 122.

The determining module 121 is configured to determine a preset mode for terminal type information, the preset mode being a mode for sending the terminal type information.

The receiving module 122 is configured to receive the terminal type information sent by a terminal, the terminal type information being used for early identification of the terminal.

It is noted that those skilled in the art understand that the method of this embodiment of the disclosure may be performed alone or in combination with some of the methods in the embodiments of the disclosure or some of the methods in the related art.

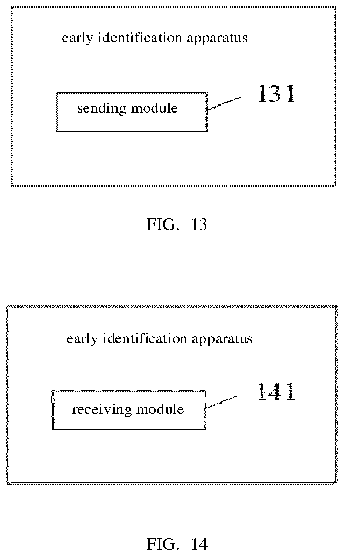

FIG. 13 is a block diagram illustrating an early identification apparatus according to an embodiment. The apparatus includes a sending module 131.

The sending module 131 is configured to send terminal type information to a base station based on a preset mode determined by the base station, in which the preset mode is a mode for sending the terminal type information, and the terminal type information is used for early identification of the terminal.

It is noted that those skilled in the art understand that the method of this embodiment of the disclosure may be performed alone or in combination with some of the methods in the embodiments of the disclosure or some of the methods in the related art.

FIG. 14 is a block diagram illustrating an early identification apparatus according to an embodiment. The apparatus includes a receiving module 141.

The receiving module 141 is configured to receive a notification message sent by a base station, in which the notification message indicates that the terminal is a terminal that needs to be identified early.

It is noted that those skilled in the art understand that the method of this embodiment of the disclosure may be performed alone or in combination with some of the methods in the embodiments of the disclosure or some of the methods in the related art.

Embodiments of the disclosure provide a communication device. The communication device includes:
a processor; and
a memory for storing instructions executable by the processor;
in which the processor is configured to execute the executable instructions to implement the method described in any embodiment of the disclosure.

The processor may include various types of storage mediums that are non-transitory computer storage medium capable of continuing to memorize the information stored thereon after the communication device is powered down.

The processor may be connected to the memory via a bus or the like for reading the executable programs stored on the memory.

Embodiments of the disclosure also provide a computer storage medium having computer executable programs stored thereon. When the executable programs are executed by the processor, the method of any embodiment of the disclosure is implemented.

With respect to the apparatus of the above embodiments, the specific manner in which each module performs an operation has been described in detail in the embodiments relating to the method, and will not be described in detail herein.

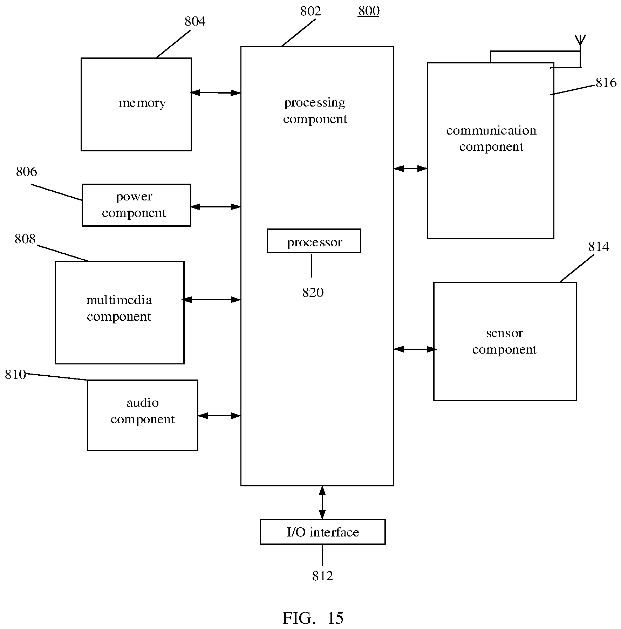

FIG. 15 is a block diagram illustrating a terminal according to an embodiment.

As illustrated in FIG. 15, a terminal 800 is provided in the embodiment. The terminal may be a mobile phone, a computer, a digital broadcasting terminal, a message transceiver device, a game console, a tablet device, a medical device, a fitness device and a personal digital assistant.

As illustrated in FIG. 15, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone call, data communication, camera operation, and recording operation. The processing component 802 may include one or more processors 820 to perform instructions to implement all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the terminal 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the terminal 800 is in an operation mode, such as a calling mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of a user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In an exemplary embodiment, the communication component 816 receives a broadcast signal from an external broadcast management system or broadcast associated information via a broadcast channel. In an exemplary embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the terminal 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In the embodiments, there is also provided a non-transitory computer readable storage medium including instructions, such as the memory 804, executable by the processor 820 in the terminal 800, for implementing the above methods. For example, the non-transitory computer-readable storage medium may be a ROM, a Random Access Memory (RAM), a CD-ROM, a magnetic tape, a floppy disc, and an optical data storage device.

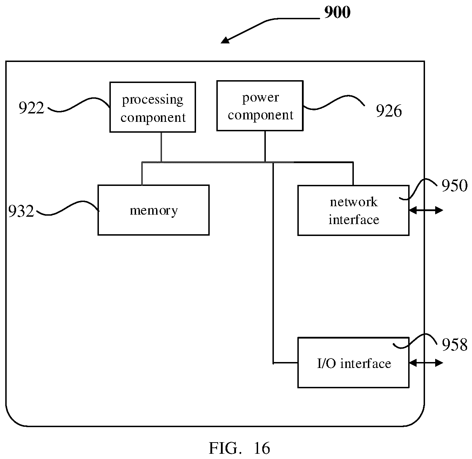

FIG. 16 is a block diagram illustrating a base station 900 according to an embodiment. For example, the base station 900 may be provided as a network side device. As illustrated in FIG. 16, the base station 900 includes a processing component 922 including one or more processors, and memory resources represented by a memory 932 for storing instructions that can be executed by the processing component 922, such as applications. The application programs stored in the memory 932 may include one or more modules each corresponding to a set of instructions. In addition, the processing component 922 is configured to execute the instructions to implement the method performed by the base station.

The base station 900 may also include a power component 926 configured to perform power management of the base station 900, a wired or wireless network interface 950 configured to connect the base station 900 to a network, and an I/O interface 958. The base station 900 may operate on an operating system stored in the memory 932, such as Windows ServerTM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An early identification method, performed by a base station, comprising:
determining a preset mode for terminal type information, wherein the preset mode is a mode for sending the terminal type information; and
receiving the terminal type information sent by a terminal, wherein the terminal type information is used for early identification of the terminal.

2. The method of claim 1, wherein the terminal is one or more of:
a reduced capability (Redcap) terminal; or
a preset version of a new radio (NR) terminal.

3. The method of claim 1, wherein the preset mode is one or more of:
a first mode of receiving the terminal type information sent by the terminal through a first random access message (msg1) in a four-step random access procedure;
a second mode of receiving the terminal type information sent by the terminal through a third random access message (msg3) in a four-step random access procedure;
a third mode of receiving the terminal type information sent by the terminal through a random access message (msgA) of a physical random access channel (PRACH) in a two-step random access procedure;
a fourth mode of receiving the terminal type information sent by the terminal through a random access message (msgA) of a physical uplink shared channel (PUSCH) in a two-step random access procedure; or
a fifth mode of receiving the terminal type information sent by the terminal through a fifth message (msg5) in a random access procedure.

4. The method of claim 3,
wherein the msg1 is configured to indicate a preset random access resource, and/or,
the msgA of the PRACH in the two-step random access procedure is configured to indicate a preset random access resource;
wherein the preset random access resource is configured by the base station.

5. The method of claim 1, further comprising:
determining that the terminal is a terminal that needs to be identified early; and
sending a notification message to a core network device, wherein the notification message is configured to notify that the terminal is the terminal that needs to be identified early.

6. An early identification method, performed by a terminal, comprising:
sending terminal type information to a base station based on a preset mode determined by the base station, wherein the preset mode is a mode for sending the terminal type information, and the terminal type information is used for early identification of the terminal.

7. The method of claim 6, wherein the terminal is one or more of:
a reduced capability (Redcap) terminal; or
a preset version of a new radio (NR) terminal.

8. The method of claim 6, wherein the preset mode is one or more of:
a first mode of sending by the terminal the terminal type information to the base station through a first random access message (msg1) in a four-step random access procedure;
a second mode of sending by the terminal the terminal type information to the base station through a third random access message (msg3) in a four-step random access procedure;
a third mode of sending by the terminal the terminal type information to the base station through a random access message (msgA) of a physical random access channel (PRACH) in a two-step random access procedure;
a fourth mode of sending by the terminal the terminal type information to the base station through a random access message (msgA) of a physical uplink shared channel (PUSCH) in a two-step random access procedure; or
a fifth mode of sending by the terminal the terminal type information to the base station through a fifth message (msg5) in a random access procedure.

9. The method of claim 6,
wherein the msg1 is configured to indicate a preset random access resource, and/or,
the msgA of the PRACH in the two-step random access procedure is configured to indicate a preset random access resource;
wherein the preset random access resource is configured by the base station.

10. An early identification apparatus, comprising:
a determining module, configured to determine a preset mode for terminal type information, wherein the preset mode is a mode for sending the terminal type information; and
a receiving module, configured to receive the terminal type information sent by a terminal, wherein the terminal type information is used for early identification of the terminal.

11. An early identification apparatus, comprising:
a sending module, configured to send terminal type information to a base station based on a preset mode determined by the base station, wherein the preset mode is a mode for sending the terminal type information, and the terminal type information is used for early identification of the terminal.

12. A communication device, comprising:
a memory; and
a processor, coupled to the memory, wherein the processor is configured to execute computer-executable instructions stored on the memory to implement the method of any one of claims 1-5 or claims 6-9.

13. A computer storage medium having computer-executable instructions stored thereon, wherein when the computer-executable instructions are executed by a processor, the method of any one of claims 1-5 or claims 6-9 is implemented.
